# EUROPÄISCHE PATENTSCHRIFT

(11) **EP 3 792 036 B1**
(45) Veröffentlichungstag und Bekanntmachung des Hinweises auf die Patenterteilung: **08.05.2024**
(21) Anmeldenummer: 20205166.0
(22) Anmeldetag: 28.03.2019
(51) Int. Cl.: B29C 49/56, B29C 49/46, B29C 33/20, B29C 33/24, B29C 49/36, B29C 49/48, B65B 7/00, B65B 3/02, B65B 7/28, B65B 43/50, B29C 49/06, B29L 31/00

(54) **VORRICHTUNG ZUM HERSTELLEN EINES BEHÄLTERS AUS EINEM THERMOPLASTISCHEN VORFORMLING**
DEVICE FOR PRODUCING A CONTAINER FROM A THERMOPLASTIC PARISON
DISPOSITIF DE FABRICATION D'UN RÉCIPIENT À PARTIR D'UNE PRÉFORME THERMOPLASTIQUE

(30) Priorität: 29.03.2018 DE 102018107676
(43) Veröffentlichungstag der Anmeldung: 17.03.2021
(62) Teilanmeldung aus: 19715435.4
(73) Patentinhaber: KHS GmbH, 44143 Dortmund (DE)
(72) Erfinder: Linke, Michael, 22159 Hamburg (DE); LITZENBERG, Michael, 21039 Börnsen (DE); Baumgarte, Rolf, 22926 Ahrensburg (DE); JAISER, Benjamin, 20144 Hamburg (DE)
(74) Vertreter: Eisenführ Speiser

(56) Entgegenhaltungen:
- EP-A1- 2 944 450
- DE-A1-102010 064 585
- FR-A1- 3 011 763

## Beschreibung

Die Erfindung betrifft eine Vorrichtung nach dem Oberbegriff des Patentanspruchs 1. Bevorzugt geht es um eine Vorrichtung zum Herstellen von Flaschen durch Blasformen, also mithilfe eines gasförmigen Fluides, oder durch ein flüssiges Füllgut.

Die Herstellung von Behältern durch Blasformen aus Vorformlingen aus einem thermoplastischen Material, beispielsweise aus Vorformlingen aus PET (Polyethylenterephthalat), ist aus der DE 43 40 291 A1 bekannt. Die thermisch konditionierten Vorformlinge werden innerhalb einer Blasmaschine unterschiedlichen Bearbeitungsstationen zugeführt. Typischerweise weist eine Blasmaschine eine Heizeinrichtung zum Temperieren bzw. zum thermischen Konditionieren der Vorformlinge sowie eine Blaseinrichtung mit wenigstens einer Blasstation auf, in deren Bereich der jeweils zuvor temperierte Vorformling zu einem Behälter expandiert wird. Die Expansion erfolgt mithilfe eines Druckgases, welches mit einem Formdruck in den zu expandierenden Vorformling eingeleitet wird. Der verfahrenstechnische Ablauf ist in der genannten DE 43 40 291 A1 erläutert. Der grundsätzliche Aufbau einer Blasstation ist in der DE 42 12 583 A1 beschrieben. Unter Temperierung oder thermischer Konditionierung wird verstanden, dass der Vorformling auf eine für die Blasumformung geeignete Temperatur erwärmt und gegebenenfalls ein Temperaturprofil dem Vorformling aufgeprägt wird. Blasformung von Behältern aus Vorformlingen unter zusätzlicher Verwendung einer Reckstange zum Strecken der Vorformlinge ist ebenfalls bekannt.

Die durch Blasformen hergestellten Behälter werden typischerweise einer nachfolgenden Fülleinrichtung zugeführt und hier mit dem vorgesehenen Produkt oder Füllgut gefüllt. Es werden also eine separate Blasmaschine und eine separate Füllmaschine verwendet. Diese können auch zu einem Maschinenblock zusammengefasst sein, wobei weiterhin das Blasformen und das Füllen an gesonderten Maschinenkomponenten und zeitlich nacheinander erfolgen.

Ebenfalls bereits bekannt ist das Formen der Behälter aus den Vorformlingen durch das Füllgut selbst, das heißt unter Verwendung des Füllgutes als hydraulisches Druckmedium, siehe DE 10 2010 007 541 A1 und US 7,914,726 B2. Somit wird zeitgleich mit dem Füllen der jeweilige Vorformling in den Behälter umgeformt, also durch ein hydraulisches Umformverfahren. Auch diese Umformung kann durch den Einsatz einer Reckstange unterstützt werden.

Es ist weiterhin bekannt, befüllte Behälter in einem anschließenden Arbeitsgang zu verschließen. Dazu werden die Behälter zum Beispiel von der Fülleinrichtung nach Abschluss der Befüllung einer Transporteinrichtung übergeben und einer Verschließeinrichtung zugeführt. Eine Verblockung der Verschließeinrichtung mit vorhergehenden Maschinen ist möglich. Das Verschließen der Behälter kann aber auch noch auf einem Arbeitsrad für die Befüllung erfolgen, siehe DE 10 2010 007 541 A1 und WO 2012/104019 A1. In beiden Dokumenten ist offenbart, die gefüllten Behälter noch innerhalb der Form- und Füllstation, in der ein Vorformling durch Einleiten des Füllguts unter Druck in einen Behälter umgeformt wird, mit einem Verschluss zu versehen.

Das Arbeitsrad mit den Behältern dreht um eine insbesondere lotrechte Achse. Dabei sind die Behälter hierzu achsparallel ausgerichtet, also mit nach oben weisender Öffnung. Zum Befüllen ist ein Ventilaggregat vorgesehen, welches mit einem Ansatz auf der Öffnung aufsetzt und diesen beim Befüllen abschließt, sodass keine Flüssigkeit entweichen kann und der erforderliche Druck aufgebaut wird. Nach dem Befüllen werden die Behälter an einen Entnahmeförderer übergeben. Zuvor muss der Ansatz des Ventilaggregats vom Behälter gelöst werden.

In den befüllten, aufrechtstehenden und zugleich mit dem Arbeitsrad umlaufenden Behältern ist die Lage des Flüssigkeitsspiegels abhängig vom Füllgrad und von der auftretenden Fliehkraft. In der Praxis ist dadurch die Umdrehungsgeschwindigkeit des Arbeitsrades begrenzt. Bei vollständiger Befüllung der Behälter würde eine höhere Umdrehungsgeschwindigkeit einen stärker geneigten Flüssigkeitsspiegel bedingen, der zu einem Austritt der Flüssigkeit nach dem Lösen des Ventilaggregats von der Behälteröffnung führt.

Ein anderes Problem bei der Formung der Behälter durch Blasformen oder durch hydraulische Umformung ist der sichere Verschluss der Formen. Typischerweise besteht eine Form aus zwei Formschalen, auch als Formhälften bezeichnet, und einer Bodenform. Die Formschalen werden insbesondere entlang einer aufrechten Ebene zusammengehalten. Dabei ist die Bodenform von unten in eine durch die Formschalen gebildete Öffnung eingesetzt und formschlüssig gehalten. Die Formschalen sind im weitesten Sinne gelenkig miteinander verbunden und schwenken zur Entnahme der Behälter auseinander. Die Kraft zum Zuhalten der Formschalen wird im Wesentlichen über das zum Bewegen der Formschalen vorgesehene Gelenk aufgebracht. Dieses muss entsprechend dimensioniert sein, siehe beispielsweise DE 42 12 583 A1. Dort sind die Formschalen Formträger, die jeweils als Blasformelemente bezeichnete Teilformen aufnehmen.

Die US 2016/0250797 A1 offenbart auf einem Arbeitsrad angeordnete Umformstationen mit jeweils einer Einrichtung zum Zuhalten der geschlosenen Form der Umformstation, die radial inneliegend zu den Formschalen der Umformstation angeordnet ist und aktorisch radial nach außen bewegt wird, um in zuhaltenden Eingriff mit der geschlossenen Form zu gelangen, die relativ zur Zuhalteeinrichtung stationär angeordnet ist.

Die FR 3,011,763 offenbart eine Vorrichtung gemäß den Oberbegriff des Anspruchs 1.

Aufgabe der vorliegenden Erfindung ist es eine Vorrichtung aufzuzeigen, mit der ein besseres Zuhalten der Formen, also beim Blasformen oder beim Befüllen mit Flüssigkeit, möglich ist.

Eine erfindungsgemäße Vorrichtung, mit der das Zuhalten der Formen besonders gut möglich ist, weist die Merkmale des unabhängigen Anspruchs 1 auf. Die Vorrichtung zum Herstellen von Behältern aus thermoplastischen Vorformlingen ist mit einem um eine insbesondere vertikale Drehachse rotierenden Arbeitsrad versehen, auf dem in Umfangsrichtung aufeinanderfolgend Stationen mit Formen zur Aufnahme und insbesondere zum Ausformen der Behälter vorgesehen sind und mit dem Arbeitsrad umlaufen, wobei vorzugsweise jeder Station ein Ventilaggregat für die Zufuhr eines insbesondere unter Druck stehenden Fluides zugeordnet ist und die Formen zur Entnahme der Behälter öffenbar sind. Erfindungsgemäß sind Drucklager zum Sichern der geschlossenen Formen gegen durch Innendruck bedingtes Öffnen vorgesehen, wobei Drucklager und Formen relativ zueinander bewegbar sind zwischen einer Druckaufnahmeposition, in der die Drucklager die geschlossenen Formen von außen beaufschlagen, insbesondere an einander gegenüberliegenden Seiten der Formen, und einer anderen Position, in der die Drucklager die Formen nicht beaufschlagen. Erfindungsgemäß sind die Formen zwischen die stationären Drucklager und wieder zurückbewegbar.

Nach einem weiteren Gedanken der Erfindung können die Formen in den Stationen jeweils um eine Neigungsachse neigbar gelagert sein, wobei die Neigungsachse nahe eines Kraftschwerpunkts der durch die Drucklager beim Beaufschlagen der jeweiligen geschlossenen Form auftretenden Kräfte verläuft, derart, dass die Kraftverteilung beidseits der Neigungsachse nicht ungleicher als 1/3 zu 2/3 ist. Vorzugsweise verläuft die Neigungsachse durch den Kraftschwerpunkt. Bei zwei Drucklagern für jede Formschale und gleichen Kräften in jedem Lager, liegt der Kraftschwerpunkt genau mittig zwischen den beiden Drucklagern. Sofern die Neigungsachse außerhalb des Kraftschwerpunkts verläuft, ergeben sich auf einer Seite der Neigungsachse höhere Kräfte als auf der anderen Seite. Diese Ungleichheit soll insbesondere nicht größer als 1/3 zu 2/3 sein.

Nach einem weiteren Gedanken der Erfindung können die Formen in den Stationen jeweils um eine Neigungsachse neigbar gelagert sein, wobei die Neigungsachse zwischen den Drucklagern einer jeden Formschale verläuft, derart, dass der Abstand der Neigungsachse zum nächsten Drucklager höchstens halb so groß ist wie zum entferntesten Drucklager. Vorzugsweise verläuft die Neigungsachse mittig zwischen den Drucklagern.

Nach einem weiteren Gedanken der Erfindung können die Drucklager eine Zentrierfunktion aufweisen, derart, dass die geschlossenen Formen in der Druckaufnahmeposition durch die Drucklager zentrierend beaufschlagt sind. Durch die Zentrierfunktion werden die Formschalen oder die Formen in definierte Positionen gezwungen, insbesondere relativ zum Ventilaggregat oder zum Arbeitsrad.

Nach einem weiteren Gedanken der Erfindung beinhalten die Drucklager angetrieben bewegbare Stößel zur Anlage an der Form, insbesondere Hydraulikstößel. Mit den Stößeln kann ein maximaler Druck zum Zuhalten der Formschalen aufgebracht werden.

Nach einem weiteren Gedanken der Erfindung sind einander gegenüberliegende Drucklager einer Station kraft- und formschlüssig miteinander gekoppelt, insbesondere an einem gemeinsamen Lagerbügel gelagert, welcher einen Lagerspalt zur Aufnahme der jeweiligen Form bildet. Vorteilhafterweise ist der Lagerbügel U-förmig ausgebildet mit einem Lagerspalt zwischen Bügelschenkeln und mit Drucklagern innen an den Bügelschenkeln. Die Druckaufnahmeposition befindet sich im Lagerspalt.

Nach einem weiteren Gedanken der Erfindung sind einander gegenüberliegende Drucklager für einen oberen Bereich der jeweiligen Form vorgesehen, insbesondere mit einem Lagerbügel, welcher einen radial außen offenen Lagerspalt aufweist.

Nach einem weiteren Gedanken der Erfindung sind einander gegenüberliegende Drucklager für einen unteren Bereich der jeweiligen Form vorgesehen, insbesondere mit einem Lagerbügel, welcher einen radial innen offenen Lagerspalt aufweist.

Nach einem weiteren Gedanken der Erfindung sind Bügelschenkel des Lagerbügels schräg aufwärts gerichtet, sodass eine die Bügelschenkel verbindende Bügelbasis unterhalb einer Ebene eines Behälterbodens liegt. Bei stationärem Lagerbügel und geöffneter lotrechter Form können die Behälter in Radialrichtung entnommen werden, ohne dass der Lagerbügel dabei im Wege ist.

Vorteilhaft ist ein Verfahren zum Herstellen eines Behälters aus einem thermoplastischen Vorformling, wobei der Behälter aus dem Vorformling mit Hilfe eines Fluides entweder durch Blasformen hergestellt und anschließend insbesondere mit einem flüssigen Fluid befüllt wird oder durch Hydroformen hergestellt wird und dadurch anschließend das als Inhalt vorgesehene flüssige Fluid enhält, und wobei der Behälter während des Blasformens und/oder während der Aufnahme des insbesondere flüssigen Fluides in einer öffenbaren Form um eine insbesondere vertikale Drehachse und mit Abstand zu dieser umläuft.

Mit Vorteil befindet sich die geschlossene Form während des Verfahrens wenigstens zeitweise in einer geneigten Position, nämlich abweichend von einer lotrechten Position. Der Neigungswinkel der Form wird hier definiert durch die Lage des Behälters im Raum. In einer lotrechten Position der Form ist auch der Behälter lotrecht ausgerichtet, mit nach oben weisender Öffnung. Die geschlossene Form kann sich ausschließlich oder zeitweise in der geneigten Position befinden, vorzugsweise mit einer Neigung in Richtung auf die Drehachse. Die Einnahme einer lotrechten Position ist für die geschlossene Form nicht zwingend, auch nicht für die geöffnete Form. Soweit sich die Form in einer geneigten Position befindet und als Fluid eine Flüssigkeit vorgesehen ist, können die durch den Umlauf um die vertikale Drehachse auftretenden und auf die Flüssigkeit wirkenden Fliehkräfte ausgeglichen werden. Eine Bewegung der Form zwischen einer geneigten Position und einer weiteren, insbesondere lotrechten Position, ermöglicht die gezielte Einnahme einer Position, in der die beim Formen oder Befüllen des Behälters auftretenden Innendrücke bestmöglich aufgenommen und kompensiert werden können.

Vorzugsweise wird der Behälter in der Form aus dem Vorformling durch die als Inhalt vorgesehene Flüssigkeit geformt. Formen und Füllen des Behälters finden in einem Arbeitsgang statt, nämlich durch die als Inhalt vorgesehene Flüssigkeit. Diese verbleibt nach dem endgültigen Verschließen des Behälters in demselben. Alternativ ist das Fluid zur Formung des Behälters ein Gas, vorzugsweise Druckluft. Formen und Füllen des Behälters finden in aufeinanderfolgenden Arbeitsschritten statt. Zunächst wird die Gestalt des Behälters in der Form durch Blasformen erzeugt. Anschließend wird der Behälter mit einer Flüssigkeit befüllt.

Zusätzlich kann vorgesehen sein, dass der Vorformling in an sich bekannter Weise durch eine Reckstange gestreckt wird.

Nach einem weiteren Gedanken der Erfindung befindet sich die Form zumindest zur Entnahme des Behälters in einer lotrechten Position. Die Entnahme des Behälters aus der Form kann dann mittels an sich bekannter Übergabeförderer durchgeführt werden.

Nach einem weiteren Gedanken der Erfindung ist vorgesehen, dass sich die Form zum Einsetzen des Vorformlings in einer lotrechten Position befindet. Es können dann zum Einsetzen des Vorformlings an sich bekannte Übergabeförderer verwendet werden.

Nach einem weiteren Gedanken der Erfindung befindet sich die geschlossene Form zumindest am Ende des Befüllens mit dem Fluid in der geneigten Position, insbesondere während des gesamten Befüllens. Dadurch ergibt sich eine Übereinstimmung der Lage der Form mit dem zum Befüllen des Behälters vorgesehenen Aggregat. Zum Öffnen befindet sich die Form insbesondere in der lotrechten Position, insbesondere zur Entnahme des jeweiligen Behälters.

Nach einem weiteren Gedanken der Erfindung liegt die geschlossene Form in der geneigten Position mit ihrer Oberseite dichter an der Drehachse als mit ihrer Unterseite. Dies ermöglicht den Ausgleich der auch auf das Fluid wirkenden Fliehkräfte in bestmöglicher Weise.

Nach einem weiteren Gedanken der Erfindung weist die Neigung der geschlossenen Form, insbesondere in Richtung auf die Drehachse, eine der folgenden Bedingungen auf:
a) 15° bis 45° Abweichung von der lotrechten Position,
b) 25° bis 35° Abweichung von der lotrechten Position,
c) 30° Abweichung von der lotrechten Position.

Die angegebenen Neigungen können für die geschlossene Form stets, überwiegend oder zeitweise gelten und ermöglichen bei entsprechender Ausrichtung einen guten Ausgleich der in modernen Füllvorrichtungen auf die Flüssigkeit wirkenden Fliehkräfte.

Nach einem weiteren Gedanken der Erfindung wird die geschlossene Form vor der Zufuhr des Fluides in eine gegen ein durch Innendruck bewirktes Öffnen gesicherte Position bewegt. Die geschlossene Form wird nach der Ausformung des Behälters vor dem Öffnen aus der gegen Öffnen durch Innendruck gesicherten Position herausbewegt in eine demgegenüber ungesicherte Position, in der dann die Form geöffnet wird.

Nach einem weiteren Gedanken der Erfindung ist die geschlossene Form in wenigstens einer ihrer Positionen gegen ein durch Innendruck bewirktes Öffnen gesichert, nämlich durch Aufenthalt zwischen wenigstens zwei starr miteinander verbundenen Drucklagern. Die Drucklager halten die Form zu, nämlich durch Beaufschlagung einander gegenüberliegender Seiten der Form, insbesondere von Formschalen bzw. Formhälften. In an sich bekannter Weise kann die Form ein Bodenteil aufweisen, welches insbesondere von den Formschalen bei geschlossener Form formschlüssig gehalten wird.

Nach einem weiteren Gedanken der Erfindung ist vorgesehen, dass die geschlossene Form in einem oberen Bereich durch zwei starr miteinander verbundene Drucklager und in einem unteren Bereich durch zwei weitere starr miteinander verbundene Drucklager gegen ein durch Innendruck bewirktes Öffnen gesichert ist. Die auftretenden Kräfte werden so gleichmäßig aufgenommen und kompensiert.

Nach einem weiteren Gedanken der Erfindung wird der Behälter vor dem Öffnen der Form durch einen Deckel verschlossen, insbesondere in einer geneigten Position. Nach dem Aufsetzen des Deckels kann der Behälter beliebig manipuliert werden, ohne dass das Fluid entweichen kann. Eine Vorrichtung, in der der Behälter unmittelbar nach dem Befüllen verschlossen wird, ist an sich bekannt, beispielsweise aus der DE 10 2010 007 541 A1.

Nach einem weiteren Gedanken der Erfindung wird ein Bodenteil der Form von einem Halteorgan gegen die Form im Übrigen und wieder zurückbewegt. Dabei ist das Bodenteil mit dem Halteorgan gekoppelt. Vor dem Neigen der geschlossenen Form wird das Bodenteil vom Halteorgan entkoppelt. In geneigter Position sind Halteorgan und Bodenteil entkoppelt, in lotrechter Position der Form zeitweise oder überwiegend gekoppelt.

Nach einem weiteren Gedanken der Erfindung ist der Behälter in der geöffneten Form bis zur Entnahme gesichert durch an einem Hals oder einem Verschluss des Behälters anliegende Sicherungsorgane, insbesondere in Verbindung mit einer Sicherung durch eine Bodenform. Die Sicherungsorgane verhindern ein Herausdrücken des Behälters aus der geöffneten Form durch die auftretenden Fliehkräfte.

Nach einem weiteren Gedanken der Erfindung ist der Behälter in der geöffneten Form bis zur Entnahme gegen eine Bewegung relativ zur Form in Umfangsrichtung, gegen die Umfangsrichtung und/oder radial nach außen gesichert.

Nach einem weiteren Gedanken der Erfindung ist vorgesehen, dass der Behälter oben einen Hals mit Stützring aufweist, und dass der Behälter aus der geöffneten Form entnommen wird durch Erfassen in einem Bereich zwischen dem Stützring und einem Schwerpunkt des Behälters, insbesondere unmittelbar unter dem Stützring. Durch das Erfassen unter dem Stützring wirkt letzterer formschlüssig der Gewichtskraft des Behälters entgegen. Ein Erfassen des Behälters näher am Schwerpunkt verringert ein durch die Handhabung auftretendes Kippmoment. So können auch schwerere Behälter sicher erfasst und abgefördert werden.

Erfindungsgemäß ist die Vorrichtung zum Herstellen von Behältern aus thermoplastischen Vorformlingen mit einem um eine insbesondere vertikale Drehachse rotierenden Arbeitsrad versehen, auf dem in Umfangsrichtung aufeinanderfolgend Stationen mit Formen zur Aufnahme und insbesondere zum Ausformen der Behälter vorgesehen sind und mit dem Arbeitsrad umlaufen, wobei vorzugsweise jeder Station ein Ventilaggregat für die Zufuhr eines insbesondere unter Druck stehenden Fluides zugeordnet ist und die Formen zur Entnahme der Behälter öffenbar sind. Die geschlossenen Formen befinden sich bevorzugt wenigstens entlang eines Teil-Abschnitts des Umlaufs um die Drehachse in einer geneigten Position, nämlich abweichend von einer lotrechten Position. Somit sind die geschlossenen Formen in ihren Stationen neigbar.

Nach einem weiteren Gedanken der Erfindung können die Formen in den Stationen jeweils um eine Neigungsachse neigbar gelagert sein, wobei die Neigungsachse nahe eines Massenschwerpunkts der jeweiligen Form verläuft, derart, dass eine Massenverteilung der Form beidseits der Neigungsachse nicht ungleicher als 1/3 zu 2/3 ist. Vorzugsweise verläuft die Neigungsachse durch den Massenschwerpunkt der Form, sodass in keiner Stellung der Form ein Drehmoment durch ungleiche Massenverteilung wirksam ist. Insbesondere wird für die Berechnung des Massenschwerpunkts die leere Form herangezogen. Die Form ist selbst relativ schwer. Ein in der Form befindlicher Behälter, mit oder ohne Flüssigkeit, wirkt sich nur gering auf die Position des Massenschwerpunkts aus.

Nach einem weiteren Gedanken der Erfindung kann ein Antrieb zum Neigen der Formen vorgesehen sein, insbesondere eine Kurvensteuerung oder ein motorischer Antrieb. Die Kurvensteuerung kann eine Kurve mit mechanischer Kraftübertragung beinhalten, etwa über eine Abfolge aus Kurvenrolle, Zahnstange und Zahnrad. Alternativ kann ein motorischer Antrieb, etwa elektrisch, pneumatisch oder hydraulisch vorgesehen sein, auch jeweils gekoppelt mit mechanischer Kraftübertragung.

Nach einem weiteren Gedanken der Erfindung können Formschalen der Formen an Formhaltern gelagert sein, wobei die Formhalter oder Formschalen hierzu Neigungslager mit Neigungsachsen aufweisen, und wobei die Neigungslager in Axialrichtung lösbar sind. Durch das Lösen der Neigungslager können die Formschalen von den Formhaltern getrennt und ausgewechselt werden. Hierzu können am Neigungslager, an der Formschale oder am Formhalter geeignete Schnellverschlüsse vorgesehen sein.

Nach einem weiteren Gedanken der Erfindung können die Formschalen der Formen an Formhaltern gelagert sein, wobei die Formhalter oder Formschalen hierzu Neigungslager mit Neigungsachsen aufweisen, und wobei die Neigungslager Gleitlager sind, insbesondere Kunststoffgleitlager. Vorzugsweise sind die Gleitlager zur Spielminimierung vorgespannt. Auch sind die Gleitlager vorzugsweise beständig gegen Wasser und Reinigungsmittel.

Nach einem weiteren Gedanken der Erfindung sind die Formen in den Stationen neigbar gelagert, insbesondere jeweils mit einer tangential zur Umfangsrichtung verlaufenden Neigungsachse oder vorzugsweise entlang einer Bewegungsbahn, welche eine Bewegungsebene senkrecht zu einer Tangenten der Umfangsrichtung definiert. Insbesondere sind nur die geschlossenen Formen neigbar.

Nach einem weiteren Gedanken der Erfindung sind Formschalen der Formen an Formhaltern gelagert, wobei jeder Formhalter eine Formschale trägt, und wobei die einer Form zugeordneten Formhalter mit den Formschalen zum Öffnen der Form auseinander und zum Schließen der Form gegeneinander bewegbar sind, insbesondere mit einer aufrechten Trennebene zwischen den Formschalen. Vorzugsweise erstreckt sich die Trennebene bezüglich der Drehachse des Arbeitsrades in radialer Richtung und entlang der Drehachse. Zusätzlich zu den Formschalen kann eine an sich bekannte Bodenform vorhanden sein.

Nach einem weiteren Gedanken der Erfindung können Formschalen der Formen direkt und unmittelbar an Formhaltern gelagert sein, nämlich ohne dazwischen angeordnete Formaufnahmen oder Formzuhalter. Die Anordnung der Formschalen zwischen Formaufnahmen ist grundsätzlich bekannt, soll hier aber vorzugsweise vermieden werden. Ebenfalls bekannt sind Formzuhalter zum Halten der Formschalen in geschlossener Position. Sofern diese vorhanden sind, sollen sie hier nicht zwischen den Formschalen und Formhaltern vorgesehen sein.

Nach einem weiteren Gedanken der Erfindung sind die Formschalen an den Formhaltern insbesondere um eine Neigungsachse neigbar, wobei die Formhalter oder Formschalen hierzu Neigungslager aufweisen. Somit weisen die beiden Formschalen einer Form jeweils eine eigene Neigungsachse auf. Bei geschlossener Form verlaufen die beiden Neigungsachsen vorteilhafterweise koaxial zueinander.

Nach einem weiteren Gedanken der Erfindung weist jede Station Sicherungsorgane zur Sicherung der Position eines Behälters in der geöffneten Form auf.

Nach einem weiteren Gedanken der Erfindung sind als Sicherungsorgane insbesondere stationäre Sicherheitshalter vorgesehen, welche die Behälter gegen Bewegungen in Umfangsrichtung absichern und die vorzugsweise im Bereich eines Behälterkopfes wirksam sind. Die Sicherungsorgane wirken am Hals, am Deckel, am Verschluss oder unmittelbar unterhalb einer oberen Öffnung des jeweiligen Behälters und sind insbesondere nicht bewegbar.

Nach einem weiteren Gedanken der Erfindung erstrecken sich die Sicherheitshalter als vorzugsweise federnde Arme von einem oberen Lagerbügel oder einer radial innen liegenden Stationsbasis nach außen in Richtung zum Behälterkopf oder Hals. Die Arme sind vorzugsweise fest mit dem Lagerbügel bzw. mit der Stationsbasis verbunden, zumindest mittelbar.

Nach einem weiteren Gedanken der Erfindung ist der Behälter durch die Sicherungsorgane gesichert, sobald sich die Form in einer lotrechten Position befindet. Bei der Bewegung in die lotrechte Position schwenkt der Behälterkopf zwischen die Sicherungsorgane.

Nach einem weiteren Gedanken der Erfindung ist als Sicherungsorgan eine insbesondere stationäre Sicherungsplanke vorgesehen, welche die Behälter gegen Bewegungen in radialer Richtung nach außen absichert und die vorzugsweise im Bereich von Behälterköpfen wirksam ist. Die Sicherungsplanke wirkt am Hals, am Deckel, am Verschluss oder unmittelbar unterhalb einer oberen Öffnung des jeweiligen Behälters.

Nach einem weiteren Gedanken der Erfindung sind eine Bodenform und ein von unten mit der Bodenform verbindbares Halteorgan für die Bodenform vorgesehen, wobei das Halteorgan bei geschlossener Form von der Bodenform abkoppelbar ist. Durch das Abkoppeln muss das Halteorgan die Neigung der Form nicht mitdurchführen.

Nach einem weiteren Gedanken der Erfindung können Halteorgan und Bodenform über händisch und ohne Werkzeug betätigbare Arretierungsorgane verbindbar sein. Die Arretierungsorgane beinhalten vorzugsweise federnd beaufschlagte Hebel, die in Kerben eingreifen. Die federnd beaufschlagten Hebel verhindern ein Trennen von Halteorgan und Bodenform. Eine manuelle Betätigung der Hebel gegen den Federdruck soll zum Trennen von Halteorgan und Bodenform möglich sein.

Nach einem weiteren Gedanken der Erfindung können Halteorgan und Bodenform über Arretierungsorgane verbindbar sein, wobei die Arretierungsorgane zugleich eine Überlastsicherung für die Verbindung zwischen Halteorgan und Bodenform bilden. Die Arretierungsorgane wirken vorzugsweise durch Kraftschluss oder Reibschluss, welcher durch Gegenkraft zerstörungsfrei überwindbar ist. Die Gegenkraft kann beispielsweise durch eine Fehlfunktion der Vorrichtung entstehen, etwa wenn das Halteorgan die Bodenform abwärts bewegen will, ohne dass zuvor die Bodenform von den Formschalen getrennt wurde. Insbesondere in diesem Fall sollen die Arretierungsorgane eine Trennung von Halteorgan und Bodenform erlauben.

Nach einem weiteren Gedanken der Erfindung sind Halteorgan und Bodenform über Arretierungsorgane verbindbar. Dabei weisen Teile der Form oberhalb der Bodenform, insbesondere Formschalen, Löseorgane auf, welche beim Schließen der Form die Arretierungsorgane zum Lösen beaufschlagen. Mit dem Lösen der Arretierungsorgane können Halteorgan und Bodenform entkoppelt werden.

Nach einem weiteren Gedanken der Erfindung sind Kurven zum Steuern der Bewegung der Formen von der geneigten Position in eine andere Position und wieder zurück vorgesehen. Die andere Position ist vorzugsweise die lotrechte Position.

Nach einem weiteren Gedanken der Erfindung sind Kurven zum Steuern der Bewegung der Halteorgane für die Bodenform vorgesehen. Die Halteorgane werden durch die Kurven auf- und abbewegt.

Nach einem weiteren Gedanken der Erfindung sind Bügelschenkel des Lagerbügels schräg aufwärts gerichtet, sodass eine die Bügelschenkel verbindende Bügelbasis unterhalb einer Ebene eines Behälterbodens liegt. Bei stationärem Lagerbügel und geöffneter lotrechter Form können die Behälter in Radialrichtung entnommen werden, ohne dass der Lagerbügel dabei im Wege ist.

Nach einem weiteren Gedanken der Erfindung weist jede Station Sicherungsorgane zur Sicherung der Position eines Behälters in der geöffneten Form auf.

Nach einem weiteren Gedanken der Erfindung sind als Sicherungsorgane insbesondere stationäre Sicherheitshalter vorgesehen, welche die Behälter gegen Bewegungen in Umfangsrichtung absichern und die vorzugsweise im Bereich eines Behälterkopfes wirksam sind. Die Sicherungsorgane wirken am Hals, am Deckel, am Verschluss oder unmittelbar unterhalb einer oberen Öffnung des jeweiligen Behälters und sind insbesondere nicht bewegbar.

Nach einem weiteren Gedanken der Erfindung erstrecken sich die Sicherheitshalter als vorzugsweise federnde Arme von einem oberen Lagerbügel oder einer radial innen liegenden Stationsbasis nach außen in Richtung zum Behälterkopf oder Hals. Die Arme sind vorzugsweise fest mit dem Lagerbügel bzw. mit der Stationsbasis verbunden, zumindest mittelbar.

Nach einem weiteren Gedanken der Erfindung ist der Behälter durch die Sicherungsorgane gesichert, sobald sich die Form in einer lotrechten Position befindet. Bei der Bewegung in die lotrechte Position schwenkt der Behälterkopf zwischen die Sicherungsorgane.

Nach einem weiteren Gedanken der Erfindung ist als Sicherungsorgan eine insbesondere stationäre Sicherungsplanke vorgesehen, welche die Behälter gegen Bewegungen in radialer Richtung nach außen absichert und die vorzugsweise im Bereich von Behälterköpfen wirksam ist. Die Sicherungsplanke wirkt am Hals, am Deckel, am Verschluss oder unmittelbar unterhalb einer oberen Öffnung des jeweiligen Behälters.

Nach einem weiteren Gedanken der Erfindung sind eine Bodenform und ein von unten mit der Bodenform verbindbares Halteorgan für die Bodenform vorgesehen, wobei das Halteorgan bei geschlossener Form von der Bodenform abkoppelbar ist. Durch das Abkoppeln muss das Halteorgan die Neigung der Form nicht mitdurchführen.

Nach einem weiteren Gedanken der Erfindung können Halteorgan und Bodenform über händisch und ohne Werkzeug betätigbare Arretierungsorgane verbindbar sein. Die Arretierungsorgane beinhalten vorzugsweise federnd beaufschlagte Hebel, die in Kerben eingreifen. Die federnd beaufschlagten Hebel verhindern ein Trennen von Halteorgan und Bodenform. Eine manuelle Betätigung der Hebel gegen den Federdruck soll zum Trennen von Halteorgan und Bodenform möglich sein.

Nach einem weiteren Gedanken der Erfindung können Halteorgan und Bodenform über Arretierungsorgane verbindbar sein, wobei die Arretierungsorgane zugleich eine Überlastsicherung für die Verbindung zwischen Halteorgan und Bodenform bilden. Die Arretierungsorgane wirken vorzugsweise durch Kraftschluss oder Reibschluss, welcher durch Gegenkraft zerstörungsfrei überwindbar ist. Die Gegenkraft kann beispielsweise durch eine Fehlfunktion der Vorrichtung entstehen, etwa wenn das Halteorgan die Bodenform abwärts bewegen will, ohne dass zuvor die Bodenform von den Formschalen getrennt wurde. Insbesondere in diesem Fall sollen die Arretierungsorgane eine Trennung von Halteorgan und Bodenform erlauben.

Nach einem weiteren Gedanken der Erfindung sind Halteorgan und Bodenform über Arretierungsorgane verbindbar. Dabei weisen Teile der Form oberhalb der Bodenform, insbesondere Formschalen, Löseorgane auf, welche beim Schließen der Form die Arretierungsorgane zum Lösen beaufschlagen. Mit dem Lösen der Arretierungsorgane können Halteorgan und Bodenform entkoppelt werden.

Nach einem weiteren Gedanken der Erfindung sind Kurven zum Steuern der Bewegung der Formen von der geneigten Position in eine andere Position und wieder zurück vorgesehen. Die andere Position ist vorzugsweise die lotrechte Position.

Nach einem weiteren Gedanken der Erfindung sind Kurven zum Steuern der Bewegung der Halteorgane für die Bodenform vorgesehen. Die Halteorgane werden durch die Kurven auf- und abbewegt.

Nach einem weiteren Gedanken der Erfindung sind die Ventilaggregate entlang von Füllachsen ausgerichtet, wobei die Füllachsen schräg gerichtet sind, nämlich nicht-parallel zur Drehachse, insbesondere mit einer Neigung gegen einen oberhalb des Arbeitsrades liegenden Teil der Drehachse. Die Füllachsen der Ventilaggregate bilden vorzugsweise eine Kegelform.

Nach einem weiteren Gedanken der Erfindung weist die Vorrichtung Aggregate zum Verschließen der Behälter in der Station auf. In jeder Station ist ein Aggregat vorgesehen, insbesondere zum Aufsetzen eines Deckels, kombiniert mit einem Ventilaggregat.

Nach einem weiteren Gedanken der Erfindung können die Formen Formschalen aufweisen, welche mit Griffmulden oder Griffstücken versehen sind. Dies erleichtert die Handhabung der Formschalen beim Auswechseln derselben.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: eine Draufsicht von oben auf eine Vorrichtung zum Herstellen von Behältern aus thermoplastischen Vorformlingen,
- Fig. 2: eine perspektivische Darstellung der Vorrichtung gemäß Fig. 1,
- Fig. 3: eine weitere perspektivische Darstellung der Vorrichtung gemäß Fig. 1,

- Fig. 4: einen vergrößerten Ausschnitt der Darstellung gemäß Fig. 2,
- Fig. 5: einen vergrößerten Ausschnitt der Darstellung gemäß Fig. 4,

- Fig. 6: eine Seitenansicht (in Umfangsrichtung eines Arbeitsrades) einer geschlossenen geneigten Form zwischen Drucklagern,
- Fig. 7: eine Schnittansicht der Form zwischen Drucklagern gemäß Fig. 6 entlang der Linie A A, nämlich als Ansicht senkrecht zur Umfangsrichtung des Arbeitsrades
- Fig. 8: eine Ansicht der Form zwischen den Drucklagern gemäß Fig. 6, jedoch in Richtung gemäß Fig. 7,
- Fig. 9: eine Form mit Drucklagern im Längsschnitt, ähnlich Fig. 7,
- Fig. 10: eine geschlossene geneigte Form mit Drucklagern und Antriebseinrichtungen zur Verstellung in perspektivischer Darstellung,
- Fig. 11: die geneigte Form gemäß Fig. 10 in einer weiteren perspektivischen Darstellung,

- Fig. 12: die Form mit Drucklagern und Antrieben zur Verstellung, nämlich aufrecht und geschlossen, in perspektivischer Darstellung,
- Fig. 13: die Form gemäß Fig. 12 in einer weiteren perspektivischen Darstellung,

- Fig. 14: die Form mit Drucklagern und Antrieben zur Verstellung, nämlich offen und mit angehobenem Boden, in perspektivischer Darstellung,
- Fig. 15: die Form gemäß Fig. 14 in einer weiteren perspektivischen Darstellung,

- Fig. 16: die Form mit Drucklagern und Antrieben zur Verstellung, nämlich offen und mit abgesenktem Boden, in perspektivischer Darstellung,
- Fig. 17: die Form gemäß Fig. 16 in einer weiteren perspektivischen Darstellung,

- Fig. 18: die geschlossene, geneigte Form mit Getriebeelementen zur Verstellung der Neigung in perspektivischer Darstellung,
- Fig. 19: die Form gemäß Fig. 18, jedoch lotrecht,

- Fig. 20: eine Abwandlung der Vorrichtung gemäß Fig. 1, nämlich mit auf dem Arbeitsrad dauerhaft geneigten Formen und schräg gerichtetem Übergabeförderer.

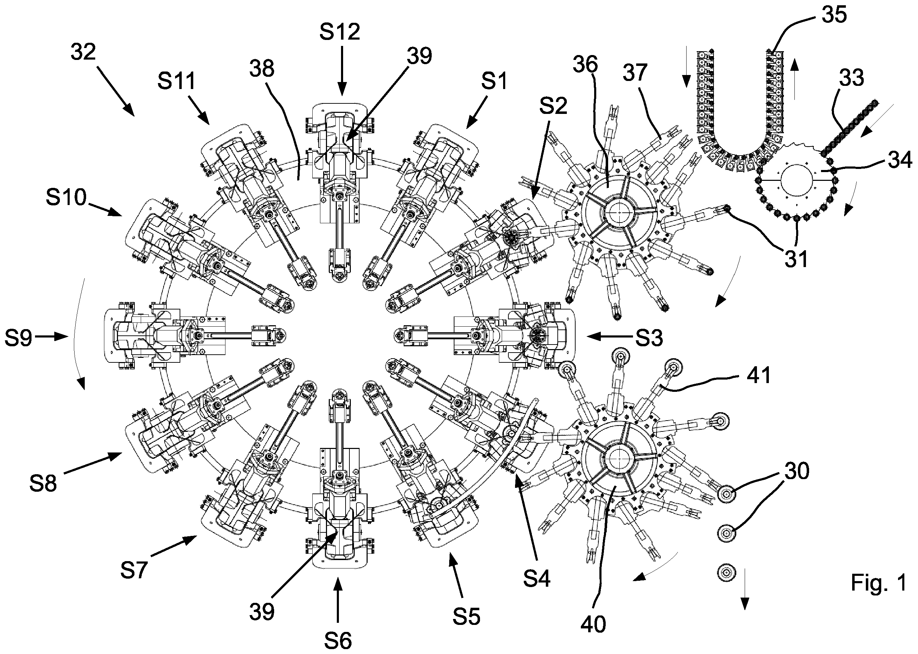

Gemäß Fig. 1 ist als Vorrichtung zum Herstellen von Behältern 30 aus thermoplastischen Vorformlingen 31 eine Form- und Fülleinrichtung 32 vorgesehen. Die Vorformlinge 31 werden entlang einer Förderstrecke 33 einem Vereinzelungsaggregat 34 und von dort an eine umlaufende Heizbahn 35 übergeben. Ein erster Übergabeförderer 36 ergreift die einzelnen Vorformlinge 31 mithilfe von teleskopierbaren und schwenkbaren Greifarmen 37, welche um eine lotrechte Achse umlaufen und die Vorformlinge 31 von der Heizbahn 35 an die Form- und Fülleinrichtung 32 übergeben.

Die Form- und Fülleinrichtung 32 weist ein umlaufendes Arbeitsrad 38 mit darauf angeordneten Stationen S1, S2, S3 ... bis S12 auf. Jede der umlaufenden Stationen S1 bis S12 weist eine Form 39 zur Herstellung eines Behälters 30 aus einem Vorformling 31 auf. Die fertigen Behälter werden den Formen 39 durch einen zweiten Übergabeförderer 40 entnommen und abgefördert. Der zweite Übergabeförderer 40 ist analog zum ersten Übergabeförderer 36 mit umlaufenden, teleskopierbaren und schwenkbaren Greifarmen 41 versehen.

Bezogen auf das auf einem Maschinengestell 42 rotierende Arbeitsrad 38 weisen die beiden Übergabeförderer 36, 40 zueinander einen Abstand von etwa 60° auf. Somit erfolgt die Handhabung der Vorformlinge 31 und Behälter 30 auf dem Arbeitsrad 38 entlang einer Strecke, die einem Drehwinkel von etwa 300° entspricht.

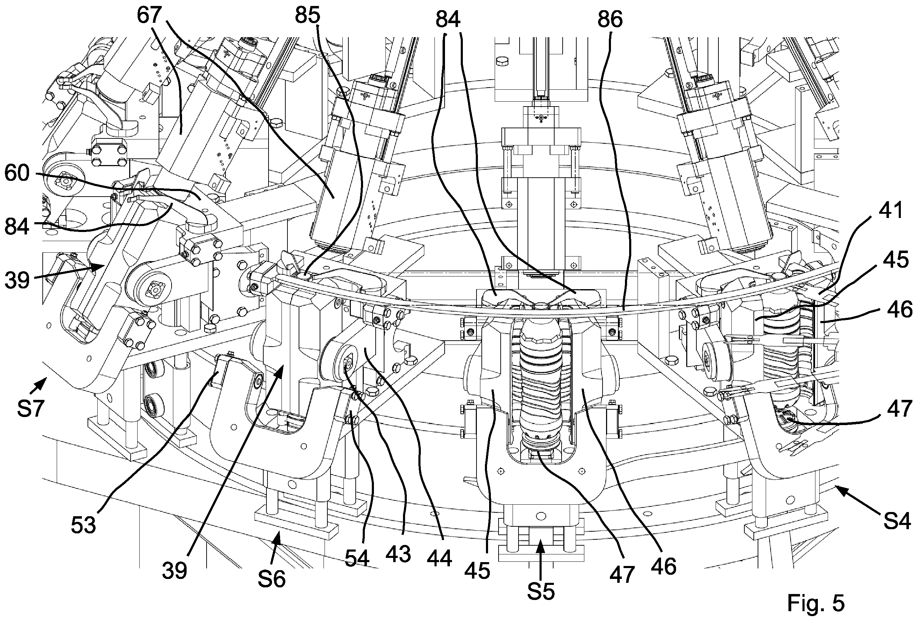

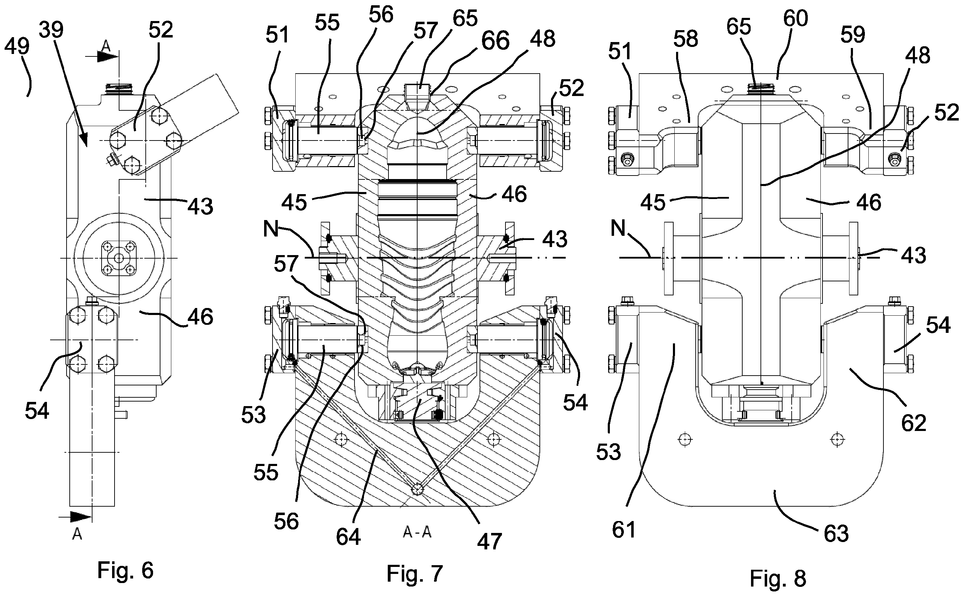

Die Formen 39 sind in den Stationen S1 bis S12 um Neigungsachsen N neigbar gelagert (sofern die Formen 39 geschlossen sind), nämlich in Neigungslagern 43, welche an Formhaltern 44 angeordnet sind, siehe insbesondere Fig. 5. Die Neigungsachsen N der Neigungslager 43 sind in Fig. 7 und 8 ersichtlich.

Die Formen 38 bestehen hier im Wesentlichen aus drei beweglichen Formteilen, nämlich aus zwei aufrechten Formschalen 45, 46 und einer Bodenform 47. Im vorliegenden Beispiel ist die Form 39 zur Herstellung einer PET-Flasche als Behälter 30 vorgesehen. Die beiden Formschalen 45, 46 sind im Wesentlichen symmetrisch ausgebildet mit jeweils einer Innenkontur entsprechend der Außenkontur der herzustellenden Flasche. Dabei liegen die Formschalen 45, 46 entlang einer lotrechten und in Bezug auf das Arbeitsrad 38 radial gerichteten Trennebene 48 aneinander an, siehe Fig. 7 und 8.

In einer nicht gezeigten Ausführungsform weisen die Formschalen jeweils Einsätze auf, deren Innenkontur der Außenkontur der herzustellenden Flasche entspricht und die schnell auswechselbar sind.

Das Öffnen der Formen 39 erfolgt durch Schwenken der Formhalter 44 um eine lotrechte Schwenkachse und durch Absenken der Bodenform 47.

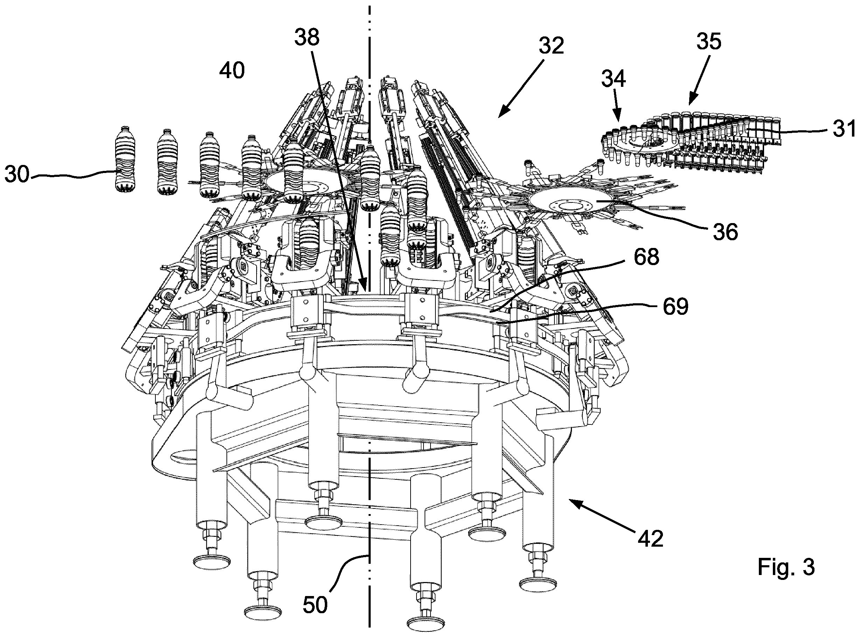

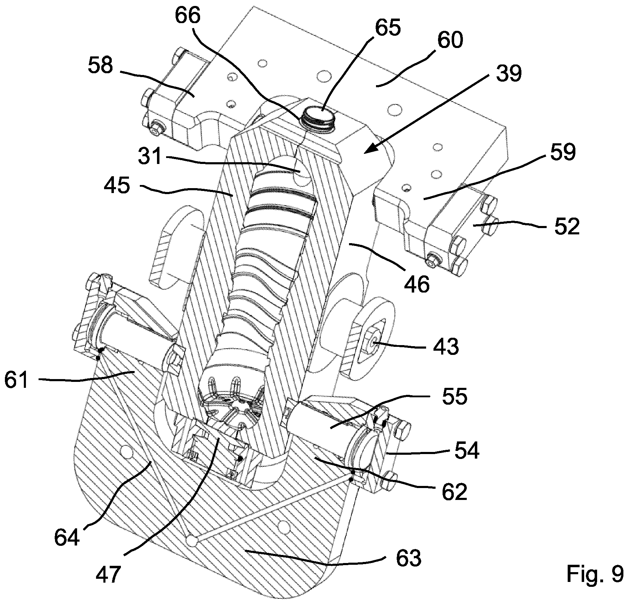

In den Fig. 6 bis 11 sind die Formen 39 geschlossen und geneigt dargestellt. Der Einfachheit halber ist die Form 39 in Fig. 6 zwar aufrecht abgebildet. Die tatsächlich vorhandene Neigung der Form 39 ergibt sich durch Vergleich mit einer dort geneigt eingezeichneten aber tatsächlich lotrechten Linie 49. Die Form 39 ist mit ihrem oberen Teil in Richtung auf eine Drehachse 50 (Fig. 3) des Arbeitsrades 38 geneigt, also zur Mitte des Arbeitsrades, nämlich vorzugsweise mit einem Winkel von etwa 30°. Auch davon abweichende Winkelstellungen können vorteilhaft sein, je nach bei der Herstellung auftretenden Fliehkräften und damit verbundenen Veränderungen der Lage des Flüssigkeitsspiegels in den Behältern 30.

Formen 39 und Behälter 30 bzw. Vorformlinge 31 sind hier identisch zueinander ausgerichtet. Das heißt, wenn die Form 39 lotrecht steht, also keine Neigung aufweist, ist auch der Behälter 30 bzw. der Vorformling 31 lotrecht ausgerichtet. Relevant ist die Ausrichtung der Behälter 30.

Die geschlossene Form 39 ist in ihrer geneigten Position (Fig. 6 bis 11) gegen auftretenden Innendruck gesichert durch von außen angreifende Drucklager 51, 52, 53, 54. Obere Drucklager 51, 52 wirken an einander gegenüberliegenden Außenseiten eines oberen Teils der Form 39, sodass an jeder Formschale 45, 46 im oberen Bereich je ein Drucklager 51, 52 angreift. Analog dazu sind die unteren Drucklager 53, 54 im unteren Bereich der Form 39 und an gegenüberliegenden Seiten derselben wirksam, siehe insbesondere Fig. 7 bis 9.

Jedes Drucklager 51 bis 54 weist einen Hydraulikstößel 55 auf, der eine Zentrierspitze 56 in eine hierzu korrespondierende Zentriervertiefung 57 in der jeweiligen Formschale 45, 46 drückt.

Die oberen Drucklager 51, 52 sind an Schenkeln 58, 59 eines oberen Lagerbügels 60 angeordnet, welcher zwischen seinen Schenkeln 58, 59 einen Lagerspalt bildet. Die unteren Drucklager 53, 54 sind an Schenkeln 61, 62 eines unteren Lagerbügels 63 angeordnet, welcher ebenfalls einen Lagerspalt bildet. Der geneigte Behälter 39 kommt in den beiden Lagerspalten zu liegen. Zur Versorgung der Hydraulikstößel 55 weisen die Lagerbügel 60, 63 Kanäle 64 für Hydraulikflüssigkeit auf.

Öffnen, Schließen und Neigen der Formen 39 sind zeitlich und steuerungstechnisch aufeinander abgestimmt. Die Vorformlinge 31 werden in die lotrechte, geöffnete Form 39 übergeben, siehe Station S2 in Fig. 1. Durch Schließen der Form 39 werden die Vorformlinge 31 an einem Behälterhals 65 ergriffen. Dabei kommt ein Stützring 66 des Behälterhalses 65 auf einer Oberseite der Form 39 zu liegen, siehe Fig. 7. Anschließend wird die geschlossene Form 39 geneigt, siehe Station S1 in Fig. 1, sodass Form 39 und Behälterhals 65 mit einem in jeder Station S1 bis S12 vorgesehenen Ventilaggregat 67 koaxial ausgerichtet sind. Die Ventilaggregate 67 sind zur Mitte des Arbeitsrades 38, also in Richtung auf die in Fig. 3 gezeigte Drehachse 50 geneigt, vorzugsweise um etwa 30 Grad.

In einem Bereich zwischen den Stationen S1 bis S6 in Fig. 1 werden die Vorformlinge 31 mit der unter hohem Druck stehenden und als Behälterinhalt vorgesehenen Flüssigkeit befüllt, sodass zugleich die Behälter 30 ausgeformt werden. Dabei sind die Formen 39 geneigt und durch die Drucklager 51 bis 54 gegen Öffnen gesichert.

Etwa in einem Bereich zwischen den Stationen S7, S6 werden die Formen 39 aus der geneigten Position in eine lotrechte Position zurückbewegt, siehe insbesondere Fig. 5, und anschließend geöffnet durch Auseinanderschwenken der beiden Formschalen 45, 46, siehe insbesondere Station S5 in Fig. 5. Anschließend werden die Behälter von den Greifarmen 41 unter dem Stützring 66 erfasst und die Bodenform 47 wird abgesenkt, siehe Station S4 in Fig. 5.

Die Neigung der Formen 39 in jeder der Stationen S1 bis S12 sowie das Absenken der Bodenformen 47 wird durch das Zusammenspiel von Steuerkurven 68, 69 mit Steuerrollen 70, 71 gesteuert. Die Steuerrollen 70 sind mit Zwischenraum übereinander an einem Steuerrollenträger 72 gehalten, ebenso die Steuerrollen 71 an einem Steuerrollenträger 73. Die Zwischenräume zwischen den beiden Steuerrollen 70 bzw. zwischen den beiden Steuerrollen 71 sind so bemessen, dass die Steuerkurve 68 bzw. die Steuerkurve 69 dazwischen passt und eine nahezu spielfreie Führung der Steuerrollenträger 72, 73 durch die Steuerkurven 68, 69 möglich ist.

Die Steuerrollenträger 72, 73 sind an Führungsorganen 74, nämlich hier an Führungsstangen auf- und abbewegbar. Die Führungsorgane 74 sind an den Stationen S1 bis S12 fest angeordnet und laufen mit diesen um.

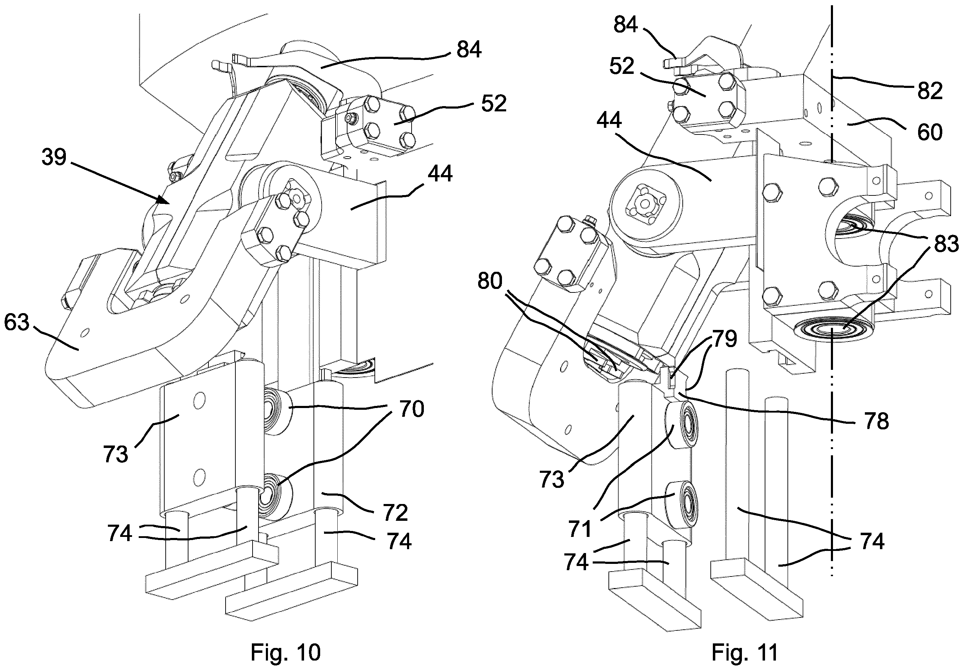

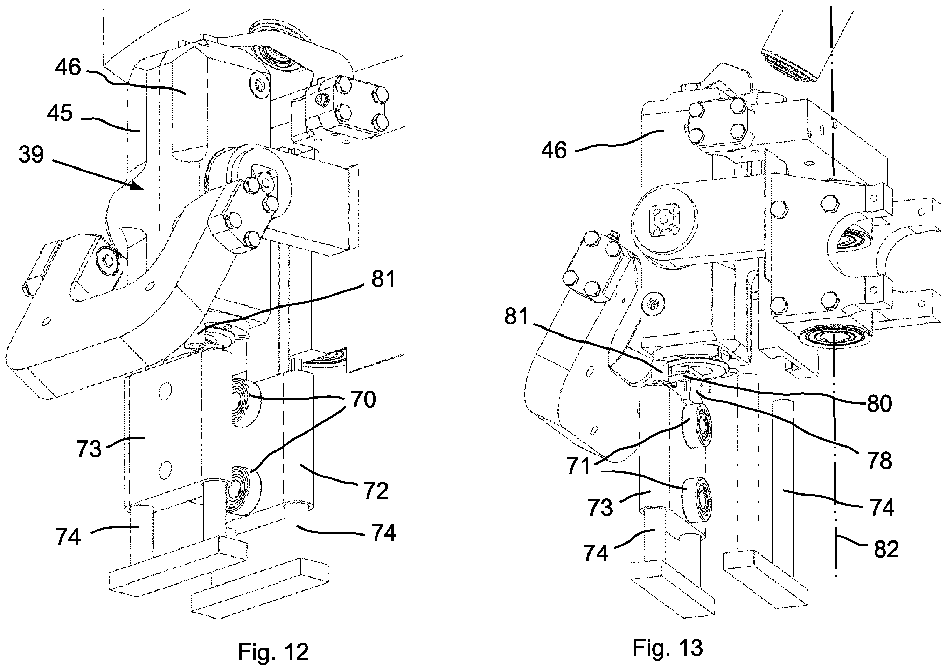

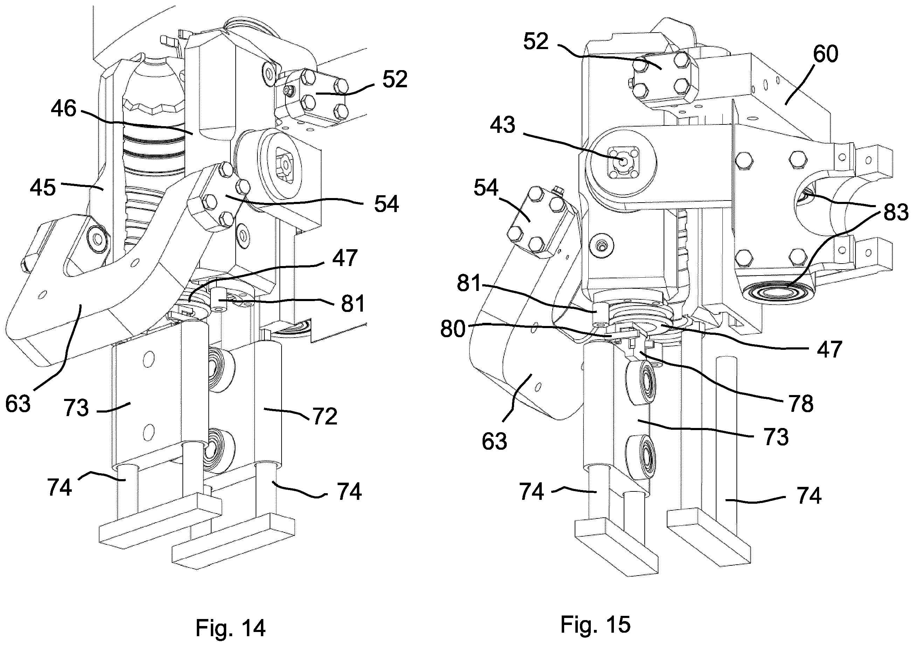

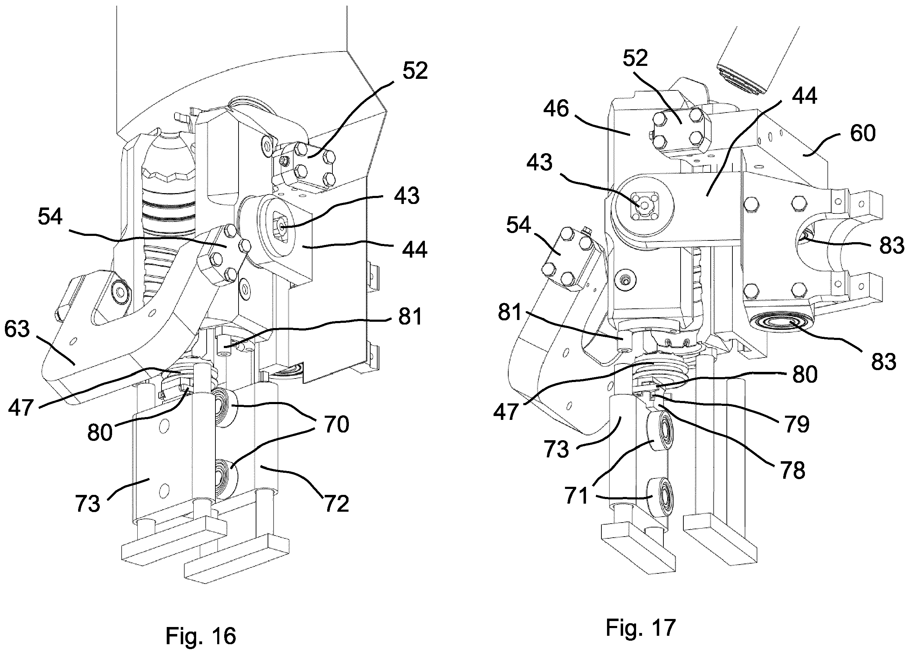

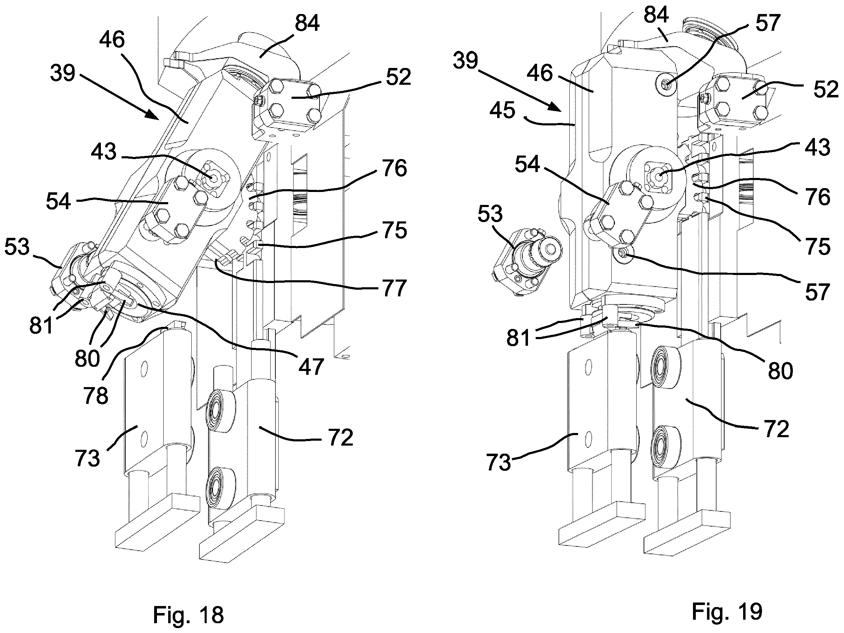

Der hintere (radial innere) Steuerrollenträger 72, in den Fig. 10 bis 19 jeweils rechts gezeichnet, steuert die Neigung der Form 39 und ist hierzu nach oben hin mit einer Zahnstange 75 verbunden, siehe Fig. 18, 19. Hierzu korrespondierend weist die Form 39 radial innen ein Zahnsegment auf. Konkret handelt es sich um zwei Zahnradsegmente 76, 77, nämlich ein Zahnradsegment je Formschale 45, 46, siehe Fig. 18. Bei aufwärts bewegtem Steuerrollenträger 72 ist die Form 39 lotrecht (Fig. 19), bei abwärts bewegtem Steuerrollenträger 72 ist die Form 39 geneigt (Fig. 18).

Der radial äußere Steuerrollenträger 73 ist mit einem Halteorgan 78 für die Bodenform 47 verbunden. Am Halteorgan 78 sind seitlich Kerben 79 (Fig. 11) für den Eintritt von Klemmorganen 80 vorgesehen. Die Klemmorgane 80 sind hier zweiarmige Hebel an der Unterseite der Bodenform 47 und zum Eingriff in die Kerben 79 federnd beaufschlagt (nicht gezeigt).

An den Unterseiten der Formschalen 45, 46 sind als Druckorgane 81 abwärts gerichtete Stifte angeordnet, die die zweiarmigen Klemmorgane 80 beim Schließen der Formschalen 45, 46 an einem Ende beaufschlagen und so die Verbindung zwischen den Klemmorganen 80 und den Kerben 79 lösen. Die Druckorgane 81 sind in diesem Sinne Löseorgane für die als Arretierungsorgane wirksamen Klemmorgane 80, welche mit den Kerben 79 zusammenwirken. Dabei sind die Löseorgane den Formschalen 45, 46 zugeordnet und die Arretierungsorgane der Bodenform 47. Nur die Kerben 79 sind als Merkmale des Halteorgans 78 mit dem Steuerrollenträger 73 verbunden.

Das Öffnen und Schließen der Formschalen 45, 46 kann durch nicht gezeigte Antriebe gesteuert werden, insbesondere in Abhängigkeit vom aktuellen Drehwinkel der jeweiligen Station S1 bis S12 auf dem Arbeitsrad 38 relativ zum Maschinengestell 42. Die Formhalter 44 beider Formschalen 45, 46 sind um eine gemeinsame lotrechte Achse 82 schwenkbar, siehe insbesondere Fig. 11. Dort sind auch zugehörige Schwenklager 83 dargestellt.

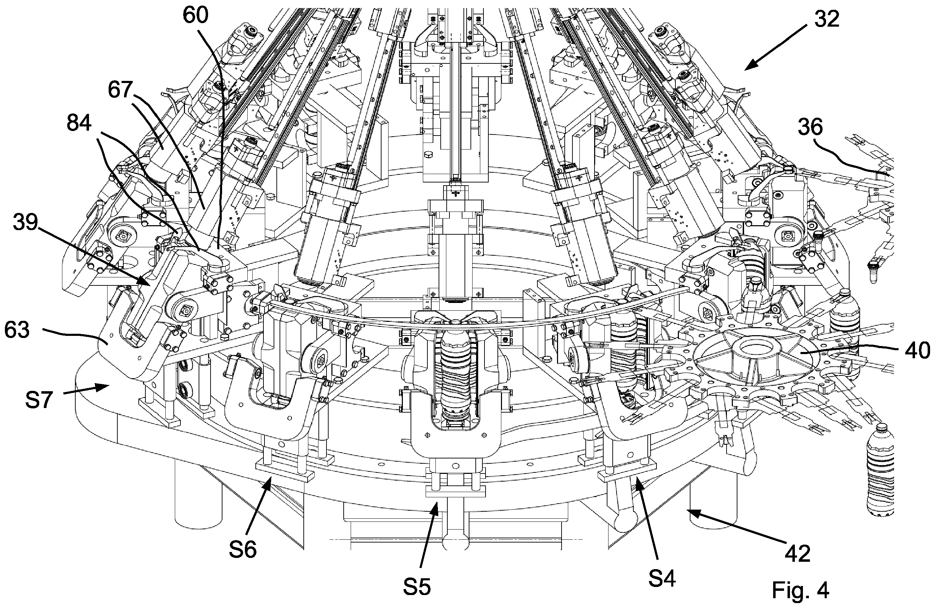

Aus den Fig. 4 und 5 ist die Bewegung der Formen 39 bis zur Entnahme der Behälter 30 ersichtlich. Der Füllvorgang ist im Bereich der Station S7 abgeschlossen. Die Form 39 befindet sich noch in geneigter Position zwischen den Lagerbügeln 60, 63.

Die in der Station S6 vorhandene Form 39 ist bereits in die lotrechte Position geschwenkt aber noch geschlossen. Die Formschalen 45, 46 sind durch die Drucklager 51 bis 54 nicht mehr beaufschlagt.

Die Form in der Station S5 ist geöffnet, das heißt, die Formschalen 45, 46 sind auseinander bewegt, während die Bodenform 47 sich noch in ihrer oberen Position befindet.

Die Station S4 befindet sich unmittelbar gegenüber dem zweiten Übergabeförderer 40. Einer der Greifarme 41 erfasst gerade den Behälter 30 unterhalb des Stützrings 66, sodass der Behälter auch in vertikaler Richtung gehalten ist. Entsprechend ist die Bodenform 47 hier bereits abgesenkt.

Im letzten Bereich vor der Entnahme der Behälter 30 aus den geöffneten Formen sind die Behälter 30 in besonderer Weise gegen Bewegungen in Umfangsrichtung des Arbeitsrades 38, in Radialrichtung und in Vertikalrichtung gesichert. Eine Abwärtsbewegung der Behälter 30 wird verhindert durch die noch in ihrer oberen Position befindlichen Bodenformen 47.

Bewegungen in Umfangsrichtung werden durch speziell hierfür vorgesehene Sicherheitshalter 84 vermieden. Als Sicherheitshalter 84 weist jede Station S1 bis S12 zwei insbesondere federnde Arme auf, die sich vom oberen Lagerbügel 60 oder von einer Stationsbasis in Richtung auf einen Behälterhals oder Behälterverschluss 85 erstrecken, nämlich beidseitig desselben, sodass der Behälter 30 in diesem Bereich in Umfangsrichtung und gegen die Umfangsrichtung abgestützt ist. Freie Enden der Arme können gekrümmt sein und sich so teilweise bzw. ein Stück weit um den Verschluss 85 herum erstrecken, siehe insbesondere die Gestaltung der Sicherheitshalter 84 in Fig. 10, 11.

Da die Arme (Sicherheitshalter 84) an der jeweiligen Station S1 bis S12 fest angeordnet sind, ergibt sich die beschriebene Sicherung nur in der lotrechten Position der Formen 39 (mit den Behältern 30). In der geneigten Position der Formen 39 sind die Sicherheitshalter 84 unwirksam bzw. der obere Teil der Form 39 befindet sich dann nicht zwischen den Sicherheitshaltern 84, siehe insbesondere die Station S7 in den Fig. 4, 5.

Als weiteres Sicherungsorgan ist eine am Maschinengestell 42 stationäre Sicherungsplanke 86 vorgesehen, die den Behälterhals oder den Verschluss 85 in Radialrichtung (nach außen hin) abstützt. Die Sicherungsplanke 86 erstreckt sich hier über einen Drehwinkel von etwas mehr als zwei Stationen, entsprechend etwas mehr als 60°. Im Bereich der Station S4 ist die Sicherungsplanke 86 leicht radial auswärts gebogen und endet dann, angepasst an die Kinematik der Greifarme 41.

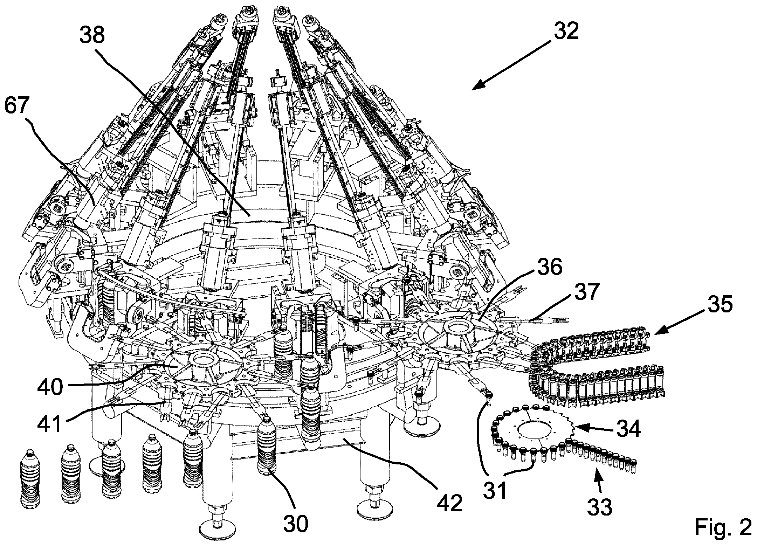

In den Fig. 1 bis 3 ist die Sicherungsplanke 86 um etwa 30° kürzer dargestellt, also in Drehrichtung später beginnend. Der konkrete Verlauf der Sicherungsplanke 86 ist abhängig vom Zeitpunkt des Öffnens der Form 39. Sobald sich die Form 39 anfängt zu öffnen, soll der Behälter 30 in Radialrichtung abgestützt sein.

In die Ventilaggregate 67 können nicht gezeigte Aggregate zum Verschließen der Behälter innerhalb der Station S1 bis S12 integriert sein. Dabei kann es sich auch um ein provisorisches oder noch nicht vollständiges Verschließen handeln. Vorteilhaft ist ein wenigstens vorläufiges Verschließen vor der Entnahme der Behälter aus den Formen.

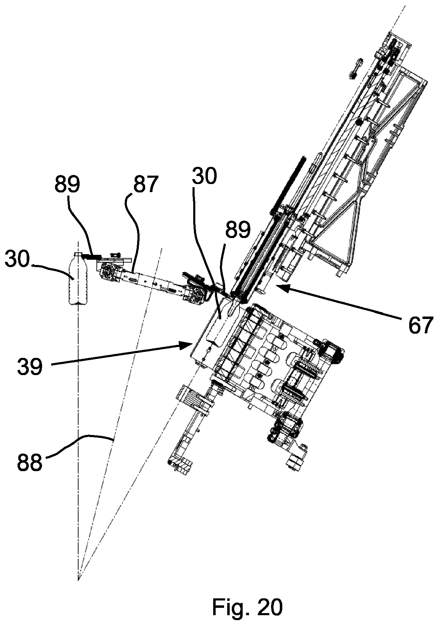

Fig. 20 zeigt in einer Schnittdarstellung eine alternative Ausführungsform. Wie schon zuvor dargestellt, sind auf einem Arbeitsrad einzelne Stationen angeordnet. Anders als zuvor, sind die Formen in den Stationen nicht neigbar, sondern befinden sich ausschließlich in einer gegenüber der lotrechten geneigten Position. Der Winkel beträgt beispielsweise 30°. Entsprechend müssen die fertigen Behälter 30 in geneigter Lage den Formen 39 entnommen werden. Ziel ist eine Abförderung der Behälter 30 in lotrechter Lage, wie in Fig. 20 links dargestellt. Um dies zu ermöglichen, ist ein Übergabeförderer 87, der von der Funktion her dem zweiten Übergabeförderer 40 entspricht, mit geneigter Drehachse 88 angeordnet, deren Neigung beträgt die Hälfte der Neigung der Behälter 30 in den Formen 39. Entsprechend sind Greifarme 89 relativ zu einer Drehebene des Übergabeförderers 87 nach unten abgewinkelt, derart, dass der Greifarm 89 bei Abgabe der Behälter 30 an einen Abförderer waagerecht ausgerichtet ist.

Mit der anhand der Figuren erläuterten Vorrichtung ist insbesondere das Ausformen der Behälter aus den Vorformlingen bei gleichzeitigem Befüllen (Hydroformen) bei hoher Umdrehung des Arbeitsrades und unter Vermeidung von fliehkraftbedingten Flüssigkeitsverlusten möglich. Zugleich werden die Formschalen 45, 46 durch die beschriebenen Drucklager 51 bis 54 sicher zusammengehalten. Dabei werden die an der Bewegung der Formschalen beteiligten Lager nicht belastet. Viel mehr wird der auf die beiden Formschalen 45, 46 beim Ausformen der Behälter wirksame Innendruck in die starr miteinander verbundenen Drucklager eingeleitet und dort kompensiert. Im vorliegenden Fall sind einander gegenüberliegende Drucklager sogar an einem starren gemeinsamen Bauteil gehalten, nämlich an den Lagerbügeln 60, 63.

### Bezugszeichenliste

| | | | |
|---|---|---|---|
| 30 | Behälter | 62 | Schenkel |
| 31 | Vorformlinge | 63 | unterer Lagerbügel |
| 32 | Form- und Fülleinrichtung | 64 | Hydraulikkanäle |
| 33 | Förderstrecke | 65 | Behälterhals |
| 34 | Vereinzelungsaggregat | 66 | Stützring |
| 35 | Heizbahn | 67 | Ventilaggregate |
| 36 | erster Übergabeförderer | 68 | innere Steuerkurve |
| 37 | Greifarme | 69 | äußere Steuerkurve |
| 38 | Arbeitsrad | 70 | Steuerrollen |
| 39 | Formen | 71 | Steuerrollen |
| 40 | zweiter Übergabeförderer | 72 | Steuerrollenträger |
| 41 | Greifarme | 73 | Steuerrollenträger |
| 42 | Maschinengestell | 74 | Führungsorgane |
| 43 | Neigungslager | 75 | Zahnstange |
| 44 | Formhalter | 76 | Zahnradsegmente |
| 45 | Formschalen | 77 | Zahnradsegmente |
| 46 | Formschalen | 78 | Halteorgane |
| 47 | Bodenformen | 79 | Kerben |
| 48 | Trennebene | 80 | Klemmorgane |
| 49 | lotrechte Linie | 81 | Druckorgane |
| 50 | Drehachse | 82 | Schwenkachse |
| 51 | Drucklager | 83 | Schwenklager |
| 52 | Drucklager | 84 | Sicherheitshalter |
| 53 | Drucklager | 85 | Verschluss |
| 54 | Drucklager | 86 | Sicherungsplanke |
| 55 | Hydraulikstößel | 87 | Übergabeförderer |
| 56 | Zentrierspitzen | 88 | Drehachse |
| 57 | Zentriervertiefungen | 89 | Greifarme |
| 58 | Schenkel | | |
| 59 | Schenkel | N | Neigungsachse |
| 60 | oberer Lagerbügel | | |
| 61 | Schenkel | | |

## Patentansprüche

1. Vorrichtung zum Herstellen von Behältern (30) aus thermoplastischen Vorformlingen (31), mit einem um eine insbesondere vertikale Drehachse (50) rotierenden Arbeitsrad (38), auf dem in Umfangsrichtung aufeinanderfolgend Stationen (S1 ... S12) mit Formen (39) zur Aufnahme und insbesondere zum Ausformen der Behälter (30) vorgesehen sind und mit dem Arbeitsrad (38) umlaufen, wobei vorzugsweise jeder Station (S1 ...S12) ein Ventilaggregat (67) für die Zufuhr eines insbesondere unter Druck stehenden Fluides zugeordnet ist und die Formen (39) zur Entnahme der Behälter (30) öffenbar sind, beinhaltend Drucklager (51, 52; 53, 54) zum Sichern der geschlossenen Formen (39) gegen durch Innendruck bedingtes Öffnen, wobei Drucklager (51, 52; 53, 54) und Formen (39) relativ zueinander bewegbar sind zwischen einer Druckaufnahmeposition, in der die Drucklager (51-54) die geschlossenen Formen (39) an einander gegenüberliegenden Seiten der Formen (39) von außen beaufschlagen, , und einer anderen Position, in der die Drucklager (51-54) die Formen (39) nicht beaufschlagen, **gekennzeichnet dadurch dass** die Formen zwischen die stationären Drucklager bewegbar und wieder zurückbewegbar sind.

2. Vorrichtung nach Anspruch 1, **dadurch gekennzeichnet, dass** die Formen (39) in den Stationen (S1 ... S12) jeweils um eine Neigungsachse (N) neigbar gelagert sind, wobei die Neigungsachse (N) nahe eines Kraftschwerpunkts der durch die Drucklager (51 ... 54) beim Beaufschlagen der jeweiligen geschlossenen Form (39) auftretenden Kräfte verläuft, derart, dass die Kraftverteilung beidseits der Neigungsachse (N) nicht ungleicher als 1/3 zu 2/3 ist.

3. Vorrichtung nach Anspruch 1 oder 2, **dadurch gekennzeichnet, dass** die Formen (39) in den Stationen (S1 ... S12) jeweils um eine Neigungsachse (N) neigbar gelagert sind, wobei die Neigungsachse (N) zwischen den Drucklagern (51 ... 54) einer jeden Formschale (45, 46) verläuft, derart, dass der Abstand der Neigungsachse (N) zum nächsten Drucklager (51-54) höchstens halb so groß ist wie zum entferntesten Drucklager (51-54).

4. Vorrichtung nach Anspruch 1 oder einem der weiteren Ansprüche, **dadurch gekennzeichnet, dass** die Drucklager (51-54) eine Zentrierfunktion aufweisen, derart, dass die geschlossenen Formen (39) in der Druckaufnahmeposition durch die Drucklager (51-54) zentrierend beaufschlagt sind.

5. Vorrichtung nach Anspruch 1 oder einem der weiteren Ansprüche, **dadurch gekennzeichnet, dass** die Drucklager (51-54) angetrieben bewegbare Stößel (55) zur Anlage an der Form (39) beinhalten, insbesondere Hydraulikstößel.

6. Vorrichtung nach Anspruch 1 oder einem der weiteren Ansprüche, **dadurch gekennzeichnet, dass** einander gegenüberliegende Drucklager (51, 52; 53, 54) einer Station kraft- und formschlüssig miteinander gekoppelt sind, insbesondere an einem gemeinsamen Lagerbügel (60, 63) gelagert sind, welcher einen Lagerspalt zur Aufnahme der jeweiligen Form (39) bildet.

7. Vorrichtung nach Anspruch 1 oder einem der weiteren Ansprüche, **dadurch gekennzeichnet, dass** einander gegenüberliegende Drucklager (51, 52) für einen oberen Bereich der jeweiligen Form (39) vorgesehen sind, insbesondere mit einem Lagerbügel (60), welcher einen radial außen offenen Lagerspalt aufweist.

8. Vorrichtung nach Anspruch 6 oder 7, **dadurch gekennzeichnet, dass** einander gegenüberliegende Drucklager (53, 54) für einen unteren Bereich der jeweiligen Form (39) vorgesehen sind, insbesondere mit einem Lagerbügel (63), welcher einen radial innen offenen Lagerspalt aufweist.

9. Vorrichtung nach Anspruch 8, **dadurch gekennzeichnet, dass** Bügelschenkel (61, 62) des unteren Lagerbügels (63) schräg aufwärts gerichtet sind, sodass eine die Bügelschenkel (61, 62) verbindende Bügelbasis unterhalb einer Ebene eines Behälterbodens liegt.

10. Vorrichtung nach einem der vorhergehenden Ansprüche, **dadurch gekennzeichnet, dass** Formschalen (45, 46) der Formen (39) an Formhaltern (44) gelagert sind, wobei jeder Formhalter (44) eine Formschale (45, 46) trägt, und wobei die einer Form (39) zugeordneten Formhalter (44) mit den Formschalen (45, 46) zum Öffnen der Form (39) auseinander und zum Schließen der Form (39) gegeneinander bewegbar sind, insbesondere mit einer aufrechten Trennebene (48) zwischen den Formschalen.

11. Vorrichtung nach einem der vorhergehenden Ansprüche, **dadurch gekennzeichnet, dass** Formschalen (45, 46) der Formen (39) direkt und unmittelbar an Formhaltern (44) gelagert sind, nämlich ohne dazwischen angeordnete Formaufnahmen oder Formzuhalter.

12. Vorrichtung nach Anspruch 10 oder 11, **dadurch gekennzeichnet, dass** die Formschalen (45, 46) an den Formhaltern (44) insbesondere um eine Neigungsachse (N) neigbar sind, und dass die Formhalter (44) oder Formschalen (45, 46) hierzu Neigungslager (43) aufweisen.

## Claims

1. Device for the manufacturing of containers (30) from thermoplastic preforms (31), with a working wheel (38) rotating around a, in particular, vertical axis of rotation (50), on which stations (S1 ... S12) with moulds (39) are provided sequentially arranged in the circumferential direction for holding and, in particular, for shaping the containers (30) and that circulate with the working wheel (38), wherein, preferably, a valve unit (67) is assigned to each station (S1 ... S12) for the supply of a fluid, which is, in particular, under pressure, and the moulds (39) can be opened for the removal of the containers (30), containing:
thrust bearings (51, 52; 53, 54) for securing the closed moulds (39) against opening caused by internal pressure, wherein the thrust bearings (51, 52; 53, 54) and moulds (39) are able to move relative to each other between a pressure holding position in which the thrust bearings (51-54) apply external pressure to the closed moulds (39) on opposite sides of the moulds (39) and another position in which the thrust bearings (51-54) do not pressurize the moulds (39), **characterized in that** the moulds can be moved between the stationary thrust bearings and can be moved back again.

2. The device according to Claim 1, **characterized in that** the moulds (39) in the stations (S1 ... S12) can each be tilted by an axis of inclination (N), wherein the axis of inclination (N) is close to a centre of forces of the thrust bearings (51 ... 54) when pressure is applied to respective closed mould (39) in such a way that the distribution of forces on both sides of the axis of inclination (N) is not more unequal than 1/3 to 2/3.

3. The device according to Claim 1 or 2, **characterized in that** the shapes (39) in the stations (S1 ... S12) can each be tilted by an axis of inclination (N), wherein the axis of inclination (N) runs between the thrust bearings (51 ... 54) of each mould shell (45, 46) in such a way that the distance of the axis of inclination (N) to the nearest thrust bearing (51-54) is not more than half as large as to the furthest thrust bearing (51-54).

4. The device according to Claim 1 or any one of the other claims, **characterized in that** the thrust bearings (51-54) comprise a centring function in such a way that the closed moulds (39) are centred in the pressure receptacle position by the thrust bearings (51-54).

5. The device according to Claim 1 or any one of the other claims, **characterized in that** the thrust bearings (51 -54) contain driven movable tappets (55) for resting on the mould (39), in particular, hydraulic tappets.

6. The device according to Claim 1 or any one of the other claims, **characterized in that** opposing thrust bearings (51, 52; 53, 54) of a station are coupled to each other in a positive and non-positive manner; in particular, they are supported on a common bearing bracket (60, 63), which forms a bearing gap to accommodate the respective mould (39).

7. The device according to Claim 1 or any one of the other claims, **characterized in that** opposing thrust bearings (51, 52) are provided for an upper part of the respective mould (39), in particular, with a bearing bracket (60) which comprises a radially open bearing gap.

8. The device according to Claim 6 or 7, **characterized in that** opposing thrust bearings (53, 54) are provided for a lower part of the respective mould (39), in particular, with a bearing bracket (63) which comprises a bearing gap that is open radially toward the inside.

9. The device according to Claim 8, **characterized in that** the bracket limbs (61, 62) of the lower bearing bracket (63) are directed diagonally upwards so that a bracket base connecting the bracket limbs (61, 62) lies below a level of a container floor.

10. A device according to any one of the preceding claims, **characterized in that** mould trays (45, 46) of moulds (39) are mounted on mould holders (44), wherein each mould holder (44) carries a mould shell (45, 46), and wherein the mould holders (44) assigned to a mould (39) with the mould shells (45, 46) can be moved apart from each other for opening the mould (39) and can be moved against each other for closing the mould (39), in particular, with an upright separation plane (48) between the mould shells.

11. Device according to any one of the preceding claims, **characterized in that** mould trays (45, 46) of moulds (39) are mounted directly and immediately on mould holders (44), i.e., without mould holders or mould retainers arranged between them.

12. The device according to Claim 10 or 11, **characterized in that** the mould shells (45, 46) on the mould holders (44) can be tilted, in particular, by an axis of inclination (N), and that the mould holders (44) or mould shells (45, 46) comprise inclined bearings (43) for this purpose.

## Revendications

1. Dispositif de fabrication de récipients (30) à partir de préformes (31) thermoplastiques, avec une roue de travail (38) en rotation autour d'un axe de rotation (50) notamment vertical sur laquelle roue est prévue une succession périphérique de stations (S1 ... S12) avec des moules (39) destinés à recevoir et en particulier à former les récipients (30), ces moules étant en rotation avec la roue de travail (38), une unité à valve (67) assurant l'adduction d'un fluide, notamment sous pression, étant de préférence affectée à chacune des stations (S1 ... S12) et les moules (39) pouvant être ouverts pour en retirer les récipients (30), comprenant des paliers de butée (51, 52; 53, 54) permettant d'éviter une ouverture fortuite des moules (39) fermés sous l'effet de la pression intérieure, les paliers de butée (51, 52; 53, 54) et les moules (39) étant mobiles les uns par rapport aux autres entre une position de pression dans laquelle les paliers de butée (51-54) font pression de l'extérieur sur des côtés opposés des moules (39) fermés et une autre position dans laquelle les paliers de butée (51-54) n'exercent pas de pression sur les moules (39), **caractérisé en ce que** les moules sont mobiles de façon à pouvoir être positionnés entre les paliers de butée stationnaires et revenir en position préalable.

2. Dispositif selon la revendication 1, **caractérisé en ce que** les moules (39) dans les stations (S1 ... S12) sont respectivement logés de façon à être inclinables autour d'un axe d'inclinaison (N), cet axe d'inclinaison (N) étant proche d'un centre de gravité des forces exercées par les paliers de butée (51 ... 54) lorsqu'ils agissent respectivement sur le moule (39) fermé de façon à ce que la répartition des forces des deux côtés de l'axe d'inclinaison (N) ne diffère pas du rapport 1/3 sur 2/3.

3. Dispositif selon la revendication 1 ou 2, **caractérisé en ce que** les moules (39) dans les stations (S1 ... S12) sont respectivement logés de façon à être inclinables autour d'un axe d'inclinaison (N), cet axe d'inclinaison (N) passant entre les paliers de butée (51 ... 54) de chaque coquille de moule (45, 46) de façon à ce que l'écartement entre l'axe d'inclinaison (N) et le palier de butée (51-54) le plus proche soit au plus moitié moins grand que l'écartement entre l'axe d'inclinaison (N) et le palier de butée (51-54) le plus éloigné.

4. Dispositif selon la revendication 1 ou l'une des revendications suivantes, **caractérisé en ce que** les paliers de butée (51-54) présentent une fonction de centrage pour que les paliers de butée (51-54) exercent leur pression de façon centrée sur les moules (39) fermés en position de pression.

5. Dispositif selon la revendication 1 ou l'une des revendications suivantes, **caractérisé en ce que** les paliers de butée (51-54) comportent des poussoirs (55) mobiles entraînés, notamment hydrauliques, pour appuyer sur le moule (39).

6. Dispositif selon la revendication 1 ou l'une des revendications suivantes, **caractérisé en ce que** les paliers de butée (51, 52; 53, 54) opposés d'une station sont accouplés par adhérence et à engagement positif et notamment logés sur un étrier de logement (60, 63) commun, lequel présente un espace de logement pour le moule (39) respectif.

7. Dispositif selon la revendication 1 ou l'une des revendications suivantes, **caractérisé en ce que** des paliers de butée (51, 52) opposés sont respectivement prévus pour une zone supérieure de chaque moule (39), notamment avec un étrier de logement (60) présentant un espace de logement radialement ouvert vers l'extérieur.

8. Dispositif selon la revendication 6 ou 7, **caractérisé en ce que** des paliers de butée (53, 54) opposés sont respectivement prévus pour une zone inférieure de chaque moule (39), notamment avec un étrier de logement (63) présentant un espace de logement radialement ouvert vers l'intérieur.

9. Dispositif selon la revendication 8, **caractérisé en ce que** les branches (61, 62) de l'étrier de support inférieur (63) sont orientées obliquement vers le haut de sorte qu'une base reliant les branches (61, 62) de l'étrier se trouve au-dessous du plan du fond du récipient

10. Dispositif selon l'une des revendications précédentes, **caractérisé en ce que** des coquilles (45, 46) des moules (39) sont logées sur des supports de moule (44), chaque support de moule (44) portant une coquille de moule (45, 46) et les supports de moule (44) affectés à un moule (39) étant mobiles de façon à pouvoir s'écarter l'un de l'autre avec les coquilles de moule (45, 46) pour ouvrir le moule (39) et se mouvoir l'un vers l'autre pour le fermer, avec notamment un plan de séparation (48) perpendiculaire entre les coquilles de moule.

11. Dispositif selon l'une des revendications précédentes, **caractérisé en ce que** des coquilles (45, 46) des moules (39) sont directement et immédiatement logées contre des supports de moule (44), à savoir sans interposition d'éléments de maintien ou de fermeture du moule.

12. Dispositif selon la revendication 10 ou 11, **caractérisé en ce que** les coquilles de moule (45, 46) logées dans les supports de moule (44) sont notamment inclinables autour d'un axe d'inclinaison (N) et que les supports de moule (44) ou les coquilles de moule (45, 46) présentent pour ce faire des paliers d'inclinaison (43).
